# EUROPEAN PATENT SPECIFICATION

(11) **EP 3 523 384 B1**
(45) Date of publication and mention of the grant of the patent: **18.08.2021**
(21) Application number: 17901326.3
(22) Date of filing: 03.10.2017
(51) Int. Cl.: C09D 17/00

(54) **A GLASS PRODUCT WHICH CAN CHANGE COLOR DEPENDING ON VIEWING ANGLE**
BLICKWINKELABHÄNGIG-FARBÄNDERNDES GLASPRODUKT
PRODUIT EN VERRE POUVANT CHANGER DE COULEUR EN FONCTION DE L'ANGLE DE VISION

(30) Priority: 06.10.2016 TR 201613972
(43) Date of publication of application: 14.08.2019
(73) Proprietor: Türkiye Sise Ve Cam Fabrikalari Anonim Sirketi, 34947 Tuzla/Istanbul (TR)
(72) Inventor: KAHRAMAN, Halide Gülsah, 34947 Tuzla/Istanbul (TR)
(74) Representative: Berkkam, Ayfer
(86) International application number: PCT/TR2017/050473
(87) International publication number: WO 2018/182553

(56) References cited:
- EP-A1- 0 578 829
- EP-A2- 0 358 949
- DE-A1- 4 419 123
- US-A- 4 605 687
- US-A1- 2006 251 883
- US-A1- 2007 248 761
- US-A1- 2010 040 788
- US-A1- 2010 047 556
- US-A1- 2014 291 313

## Description

### Technical Field

This invention relates to a glass product having a coating which is compatible with the surface it is applied on and can be seen in different colors depending on user's point of view.

### Prior art

Pigments are usually inorganic colorant materials which are insoluble in water and most of the solvents, retaining the shape or the crystal form under many process conditions. They can have uniform spherical shapes as well as two-dimensional or non-uniform geometrical shapes. While some pigments are natural, some others may be synthetic. Because the pigments are not soluble in water and many liquids, they suspend in the paint to form dispersions. Besides coloring the paint system, they are added to, pigments can also determine characteristic features of paint such as opacity, strength, hiding power and corrosion resistance. Colorant materials used as pigments can consist of natural or synthetic materials which are inorganic or organic compounds or mixtures of compounds belonging to both groups.

In addition to giving a constant color to the paint formulas, various pigments can be added to achieve special color transition effect. For this purpose, flake formed aluminum pigments having metallic reflection and mica based pearlescent effect pigments are commonly used. While metallic pigments provide a shining and fixed color (gold, bronze, silver, etc.) effect, it is expected to provide an aesthetic multicolored effect, called flip-flop, in pearlescent pigment applications. This paint behavior, which leads to the perception of a metallic shining appearance when viewed from the front and a dark and non- appearance when viewed from a lower angle is mainly due to forming a reflective layer on the surface of an object by parallel orientation of the aluminum or mica flakes used in the paint system.

Patent document no EP1650179 (A2) in the state of the art discloses a method of decoration applied on ceramic or glass objects. In the said document, a metallic pigment is mixed into a resin in order to obtain a first mixture. The resulting mixture is applied to the whole outer surface or a part of the outer surface. The high use of metallic pigment in the paint system reduces the strength of the coating; therefore, a second protective coating is applied on the first coating on the external surface. The first and/or the second coatings are applied on the outer surface preferably by spraying. Additional colorants are needed to color the said metallic effect. In the said document, characteristics of the resin and resin to pigment ratio are given.

EP 0 358 949 A2 discloses a substrate, which may be chosen as glass, comprising a coating layer, wherein the coating includes encapsulated mica pigment in a binder, wherein the binder may be chosen as an acrylate polymer and the pigment as iron oxide encapsulated metallic flakes.

Materials which change color depending on viewing angle are used in many areas such as plastics, cosmetics and paints. Chemical materials with multicolor effect are supplied as pigments and they are used in paint systems designed according to end-use areas. When the paint system is applied on surfaces, it provides changing color effect depending on viewing angle.

Glass surface is more difficult to paint than many other surfaces like metal, wood, paper, composite, plastic and concrete. Existing paint systems changing color depending on viewing angle are insufficient in terms of their resistance to environmental conditions and the effect when applied on a glass surface

In the market, the paints which change color depending on viewing angle and illumination are commonly achieved by multi-color pearlescent pigments. The carrier material of these pigments is usually synthetic silicone dioxide (SiO₂) coated with metal oxides. As silicone oxide is transparent, hiding power of pigments in this structure is poor and reduces the effect of the reflected light by transmitting some part of the incident light.

In the market, existing paints which change color depending on viewing angle are applied to different surfaces; and these paints cannot achieve enough and efficient adhesion with the glass surface. When the pigments changing color depending on viewing angle are added to paint systems compatible with a glass surface, there are problems such as nonhomogeneous mixing of the pigments and the paint system and non-sufficient hiding power of the pigments on the glass surface due to the transparent structures of the pigments.

In the technique of invention, there is a glass product providing various color transitions with changing light reflections depending on user's viewing angle with a coating which is homogenously spread over the glass surface obtained by applying a paint system in which metallic pigments are added to the glass surface, in accordance with claim 1.

### Objects of the invention

An object of this invention is to provide a glass product which has a coating with high hiding power which is obtained by mixing a metallic pigment into a transparent/semi-transparent paint system

Another object of this invention is to provide a glass product which is compatible with a glass surface and which provides various color transitions on the surface with changing light reflections depending on user's viewing angle.

Another object of this invention is to provide a glass product with a coating which has a metallic appearance, high durability and which is homogenously applied on all glass surfaces including also hollow one.

### Brief Description of the Invention

A glass product defined in the preamble claim and other claims dependent on this claim which is provided to achieve the objects of this invention comprises of a coating surface which is coated on the whole or part thereof the glass. On the coated surface, there is a coating with content of metallic pigment which is formed by a mixture of paint and a pigment. The coating with metallic pigment content provides various color transitions on the surface with changing light reflections depending on user's viewing angle. The matrix of the metallic pigment containing coating is a carrier paint. A type of resin which is compatible with the glass surface and providing high adhesion is used as carrier paint. Into the carrier paint is mixed a pigment which gives the metallic feature to the coating and which has a characteristic of color change according to the perspective of the user. The pigment is an effect pigment which is obtained by coating conductive metals and non-metallic forms on an aluminum carrier, as described in claim 1.

### Detailed Description of the Invention

The glass product which is provided in order to achieve the objects of this invention is shown in the enclosed figures, wherein:

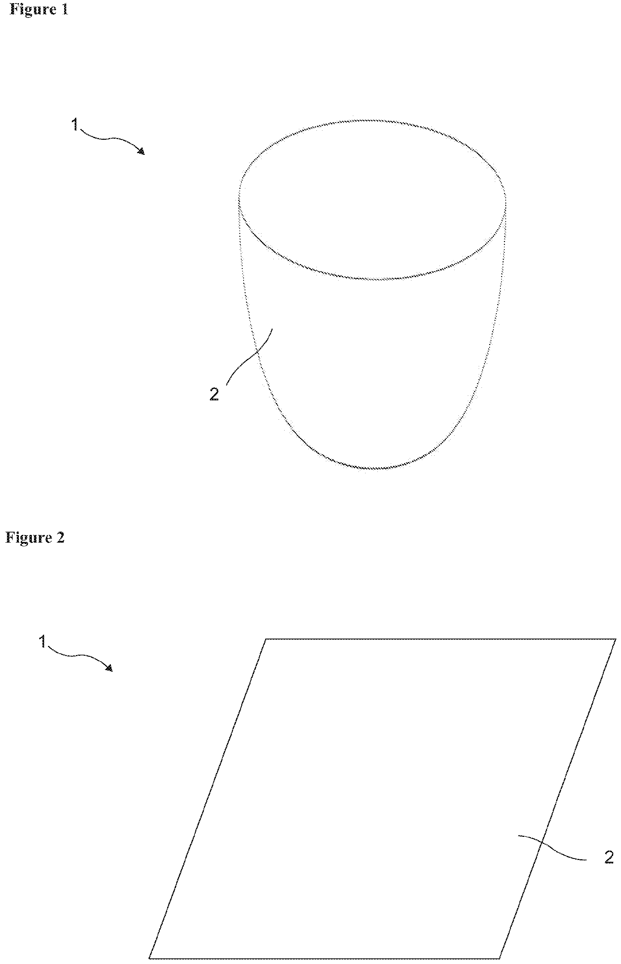

**Figure 1****.** is a front view of a glass product as a container.
**Figure 2****.** is a perspective view of a glass product as a flat glass.

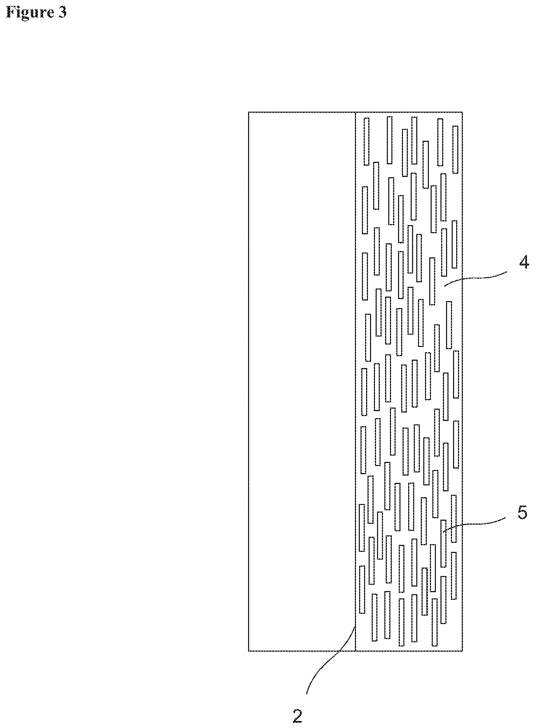

**Figure 3****.** is a sectional schematic view of a glass product.
**Figure 4****.** is a sectional schematic view of a coating with metallic pigment content.
**Figure 5****.** is a schematic view of the pigment composition.

Parts in the figures are individually numbered, and the meanings of these numbers are given below.
**1.** Glass Product
**2.** Coating surface
**3.** Coating with metallic pigment content.
**4.** Carrier paint
**5.** Pigment
**51.** Carrier flake
**52.** Carrier coating

A glass product (1) which has a coating compatible with the surface on which it is applied and changing color according to different user's point of view, with a metallic appearance essentially comprises:
- at least one glass coating surface (2), all or a portion of which is coated,
- at least one coating (3) with a metallic pigment content, which is applied on a glass coating surface (2) or on another intermediate layer available over a glass surface (2), reflecting the incident light in different directions, allowing the perception of different colors according to the viewing angle of the user, compatible with the glass surface, comprising at least one carrier paint (4) and at least one pigment (5),
- at least one carrier paint (4) which comprises the matrix of the coating (3) with a metallic pigment content and which allows the transfer of the pigments (5) mixed into it to the coating surface (2),
- a pigment (5) comprising at least one carrier flake (51) and at least one carrier coating (52), reflecting the incident light directly or indirectly, and mixed into a carrier paint (4),
- a carrier coating (52) formed by coating a conductive metal and a non-metallic material with a different light permeability value over an aluminum carrier flake (51), and
- a pigment (5) comprising a carrier coating (52) with four layers consisting of silica, silver, titanium oxide and silica, respectively, over the carrier flake (51).

According to the invention, there is a coating surface (2). The coating surface (2) is the surface of a glass product (1). The coating surface (2) may be smooth or engraved, and undergoes chemical and/or physical processes. The coating surface (2) may be colored transparent or translucent, colorless transparent or opaque.

According to the invention, there is a coating (3) with a metallic pigment content over the coating surface (2). The coating (3) with a metallic pigment content can be available on all or a portion of the coating surface (2). The coating (3) with a metallic pigment content allows the user to perceive various colors on the glass product (1) by reflecting the incident light in different directions. The coating (3) with a metallic pigment content is a coating with a high coverage and increases the metallic appearance effect due to the coverage it provides although it is used in low proportions.

The matrix of the coating (3) with a metallic pigment content is formed by a carrier paint (4). The carrier paint (4) comprises of a resin, a filling and a solvent. The resin is in an organic and/or organic-inorganic hybrid form allowing it to bind and form a strong adhesion with the coating surface (2) of the carrier paint (4). It has a chemical composition which will provide the performance characteristics of a final film according to the field of use where the coating surface (2) whereon it is applied is to be used. For this purpose, an alkyd or melamine or epoxy or polyurethane or polyester or acrylic resin is used as a binder. Adhesion of the coating surface (2) is provided by organic modified silane systems selected compatibly with the binding system utilized. According to the form of the carrier paint (4) used, water and/or an alcohol or a glycol or a monomer compatible with the resin is used as diluents.

In an embodiment of the invention, the carrier paint (4) comprises; a resin, a hardener and a solvent. In another embodiment of the invention, the carrier paint (4) comprises; a resin, an activator and a solvent. In such cases, the coating mixture which is obtained by mixing a carrier paint (4) and a pigment (5) is applied on the coating surface (2) of the glass facing the user by methods of painting with a paint spraying gun robot or an electrostatic disk or an electrostatic bell.

In an alternative embodiment of the invention, the carrier paint (4) comprises; an UV curable resin, and an activator. In such a case, the coating mixture which is obtained by mixing carrier paint (4) and pigments (5) is applied on the coating surface (2) of the glass by a screen printing method.

In an alternative embodiment of the invention, the carrier paint (4) comprises; a heat curable resin, and an activator. In such a case, the coating mixture which is obtained by mixing carrier paint (4) and pigments (5) is applied on the coating surface (2) of the glass by a pad printing method.

In an alternative embodiment of the invention, the carrier paint (4) comprises; a heat curable resin, and an activator. In such a case, the coating mixture which is obtained by mixing carrier paint (4) and pigments (5) is applied on the coating surface (2) of a flat glass flowing under a curtain by a curtain painting method.

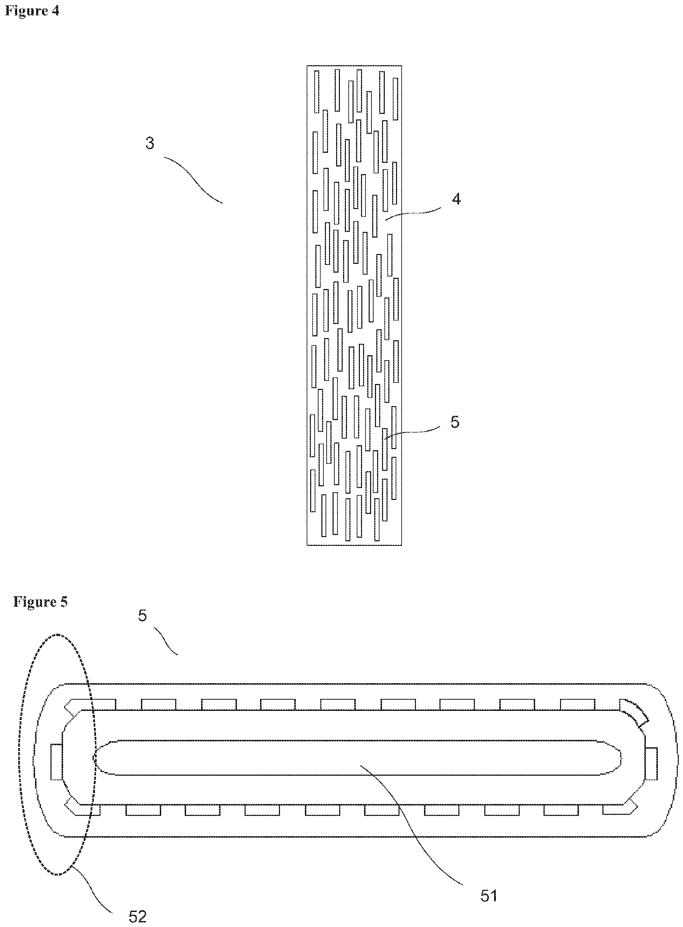

Pigments (5) are mixed into the preferred carrier paint (4). The pigment (5) mixed into the carrier paint (4) provides a metallic effect. The pigment (5) consists of aluminum flakes or aluminum flakes coated with metal oxide. The pigment (5) has a carrier flake (51) and a carrier coating (52) applied on the carrier flake (51). The carrier flake (51) is According to the invention, there is a carrier coating (52) consisting of four layers over the aluminum carrier flake (51) (Figure 4). The carrier coating (52) includes silica, silver, titanium oxide and silica, preferably respectively from the bottom to the top. The metallic effect provided by pigments (5) relies on reflection of the light at different reflection angles physically from the surface of the pigments (5). This reflection overlaps with the light beaming from the edges of the pigments (5) and small burrs. Thus, the metallic effect is a combination of the reflection and the scattered light. The more the ratio of the reflected light is, the more intense is the obtained metallic effect. Metallic effect becomes brighter/stronger as the size of the pigment (5), thus the reflecting surface area increases. Pigments (5) obtained by coating different metal oxides offer a characteristic of changing color according to user's point of view to the coating (3) with a metallic pigment content as well as a metallic effect. The flip flop characteristic of the pigment (5) is related to user's point of view to the coating (3) with a metallic pigment content. Pigments (5) at preferred sizes can be mixed into the carrier paint (4). In a preferred embodiment of the invention, the particle size of the pigments (5) mixed into the carrier paint (4) is in a range of 0-100 microns. Optimized particle size of the pigments falls in a range of 4-50 microns.

The glass product (1) of the invention is a glass household good or a glass package product or sheet glass.

In an embodiment of the invention, the glass product (1) is a drinking glass which is a household good. The coating (3) with a metallic pigment content can be applied on all or a portion of the coating surface (2) of the drinking glass.

The glass product (1) of the invention may be a glass package product. In an embodiment of the invention, the glass product (1) is a bottle. The glass package product which is a bottle can be used as a package for liquids such as olive oil, water, high alcohol, fizzy drinks, still drinks, energy drink, wine, etc. The coating (3) with a metallic pigment content can be applied on all or a portion of the coating surface (2) of the bottle.

In an embodiment of the invention, the glass product (1) is sheet glass. Sheet glass can be used in various fields and in different implementations. The coating (3) with a metallic pigment content can be applied on all or a portion of the coating surface (2) on a surface of sheet glass. Sheet glass having a coating (3) with a metallic pigment thereon can be used in many different fields such as interior architecture, exterior architecture, automotive, furniture, etc.

The processed surface of the glass product (1) in this embodiment of the invention is the coating surface (2). The coating surface (2) can be any part of a glass product (1) whereon the coating is to be applied. A coating (3) with a metallic pigment content is applied over the coating surface (2). The coating (3) with a metallic pigment content is a coating with a metallic appearance which allows the user to perceive different colors according to perspective to the glass product (1). The coating (3) with a metallic pigment content consists of a carrier paint (4) compatible with the glass surface and pigments (5) mixed into this carrier paint (4). Pigments (5) consist of a carrier coating (52) applied over an aluminum carrier flake (51). The carrier coating (52) applied over an aluminum carrier flake (51) consists of four layers consisting of silica, silver, titanium oxide and silica, respectively, over the carrier flake (51). The incident light falling on the coating (3) with a metallic pigment content collides the pigment (5) which is one of the components comprising the coating (3) with a metallic pigment content. Some of the light falling on the pigment (5) is reflected, some of it passes through the upper layer to a lower layer and is reflected from lower layers. The light beams reflecting from the layers with different refractive index values both add a metallic appearance to the coating (3) with a metallic pigment content and provide a characteristic of color change according to viewing angle.

## Claims

1. A glass product (1) which is a household good with/without a chamber or a glass packaging product or sheet glass, the glass product (1) comprising a coating (3) that is compatible with the surface on which it is applied and changes color by different color reflections according to different perspectives of the user, with a metallic appearance, wherein the glass product (1) essentially comprising:
- at least one glass coating surface (2), all or a portion of which is coated,
- the said coating (3) comprising a metallic pigment (5) and a carrier paint (4), wherein the metallic pigment (5) consists of a carrier coating (52) applied over an aluminium carrier flake (51),
- **characterized in that** the said metallic pigment (5) comprising the carrier coating (52) consists of four layers of silica, silver, titanium oxide and silica,
- the said carrier paint (4), which forms the matrix of the coating (3), transfers the said metallic pigments (5) that are mixed into it to the surface to be coated, and consists of a resin, a filler and a solvent.

2. A glass product (1) according to claim 1, **characterized by** a carrier paint (4) which has a resin with an organic and/or organic-inorganic hybrid form allowing it to bind and form a strong adhesion with the coating surface (2).

3. A glass product (1) according to claim 1, **characterized by** a carrier paint (4) comprising an alkyd, melamine, epoxy, polyurethane, polyester and acrylic resin.

4. A glass product (1) according to claim 1, **characterized by** a carrier paint (4) comprising water or water,and an alcohol, a glycol and a monomer solvent compatible with the resin.

5. A glass product (1) according to claim 1, **characterized by** a carrier paint (4) comprising a resin, an activator and a solvent, thus allowing the implementation of methods of painting with a paint spraying gun robot, an electrostatic disk or an electrostatic bell.

6. A glass product (1) according to claim 1, **characterized by** a carrier paint (4) comprising a resin or an activator curable with an UV or heat treatment, thus allowing the methods of screen printing, pad printing or curtain painting.

7. A glass product (1) according to claim 1, **characterized by** a pigment (5) with a particle size up to 100 microns, the particle size is between 5-40 microns.

## Patentansprüche

1. Glasprodukt (1), das ein Haushaltsgegenstand mit/ohne eine Kammer oder ein Glasverpackungsprodukt oder Flachglas ist, das Glasprodukt (1) umfasst eine Beschichtung (3), die kompatibel mit der Oberfläche ist, auf der die Beschichtung aufgebracht ist, und die ihre Farbe durch unterschiedliche Farbreflexe nach unterschiedlichen Perspektiven des Benutzers ändert, mit einem metallischen Aussehen, wobei das Glasprodukt (1) im Wesentlichen umfasst:
- mindestens eine Glasbeschichtungsfläche (2), welche ganz oder teilweise beschichtet ist,
- die genannte Beschichtung (3) umfasst ein Metallpigment (5) und eine Trägerfarbe (4), wobei das Metallpigment (5) aus einer Trägerbeschichtung (52) besteht, die über einer Aluminium-Trägerflocke (51) aufgebracht ist,
- **dadurch gekennzeichnet, dass** das genannte Metallpigment (5), die Trägerbeschichtung (52) umfasst, aus vier Schichten aus Silizium, Silber, Titanoxid und Silizium besteht,
- die genannte Trägerfarbe (4), welche die Matrix der Beschichtung (3) bildet, die darin eingemischten genannten Metallpigmente (5) auf die zu beschichtende Oberfläche überträgt, und aus einem Harz, einem Füllstoff und einem Lösungsmittel besteht.

2. Glasprodukt (1) nach Anspruch 1, **gekennzeichnet durch** einen Trägerfarbe (4), der ein Harz mit einer organischen und/oder organisch-anorganischen Hybridform aufweist, die es ermöglicht, sich mit der Beschichtungsoberfläche (2) zu verbinden und eine starke Adhäsion zu bilden.

3. Glasprodukt (1) nach Anspruch 1, **gekennzeichnet durch** einen Trägerfarbe (4), umfassend ein Alkyd, Melamin, Epoxid, Polyurethan, Polyester und Acrylharz.

4. Glasprodukt (1) nach Anspruch 1, **gekennzeichnet durch** eine Trägerfarbe (4), umfassend Wasser oder Wasser, und einen Alkohol, ein Glykol und ein mit dem Harz kompatibles Monomer-Lösungsmittel.

5. Glasprodukt (1) nach Anspruch 1, **gekennzeichnet durch** eine Trägerfarbe (4), umfassend ein Harz, einen Aktivator und ein Lösungsmittel, so dass die Ausführung von Verfahren zum Färben mit einem Farbspritzpistolenroboter, einer elektrostatischen Scheibe oder einer elektrostatischen Glocke möglich ist.

6. Glasprodukt (1) nach Anspruch 1, **gekennzeichnet durch** eine Trägerfarbe (4), umfassend ein Harz oder einen Aktivator, der mit einer UV oder Hitzebehandlung härtbar ist, so dass die Verfahren des Siebdrucks, Tampondrucks oder der Vorhangfarbe möglich sind.

7. Glasprodukt (1) nach Anspruch 1, **gekennzeichnet durch** ein Pigment (5) mit einer Teilchengröße von bis zu 100 Mikron, die Teilchengröße liegt zwischen 5-40 Mikron.

## Revendications

1. Un produit en verre (1) étant un article ménager avec/sans chambre ou un produit d'emballage en verre ou en verre à vitre, le produit en verre (1) comprenant un revêtement (3) compatible avec la surface sur laquelle il est appliqué et change de couleur par différents reflets de couleur selon différentes perspectives de l'utilisateur, avec un aspect métallique, dans lequel le produit verrier (1) comprend essentiellement :
- au moins une surface de revêtement de verre (2) dont tout ou une partie est revêtue,
- ledit revêtement (3) comprenant un pigment métallique (5) et une peinture support (4), dans lequel le pigment métallique (5) consiste en un revêtement support (52) appliqué sur une lamelle support d'aluminium (51),
- **caractérisé en ce que** ledit pigment métallique (5) comprenant le revêtement support (52) consiste en quatre couches de silice, d'argent, d'oxyde de titane et de silice,
- ladite peinture support (4) qui forme la matrice du revêtement (3), transfère lesdits pigments métalliques (5) qui y sont mélangés sur la surface à revêtir, et est constituée d'une résine, d'une charge et d'un solvant.

2. Un produit de en verre (1) selon la revendication 1, **caractérisé par** une peinture support (4) qui a une résine avec une forme hybride organique et/ou organique-inorganique lui permettant de se lier et de former une forte adhérence avec la surface de revêtement (2) .

3. Un produit de en verre (1) selon la revendication 1, **caractérisé par** une peinture support (4) comprenant une alkyde, mélamine, époxy, polyuréthane, polyester et résine acrylique.

4. Un produit de en verre (1) selon la revendication 1, **caractérisé par** une peinture support (4) comprenant de l'eau ou de l'eau et un alcool, un glycol et un solvant monomère compatible avec la résine.

5. Un produit en verre (1) selon la revendication 1, **caractérisé par** une peinture support (4) comprenant une résine, un activateur et un solvant permettant ainsi la mise en œuvre de procédés de peinture avec un robot pistolet de pulvérisation de peinture, un disque électrostatique ou une cloche électrostatique.

6. Un produit en verre (1) selon la revendication 1, **caractérisé par** une peinture support (4) comprenant une résine ou un activateur curable avec un traitement UV ou thermique, permettant ainsi les procédés de sérigraphie, tamponnage ou peinture rideau.

7. Un produit en verre (1) selon la revendication 1, **caractérisé par** un pigment (5) avec une granulométrie allant jusqu'à 100 microns, la granulométrie étant comprise entre 5 et 40 microns.
